# EUROPÄISCHE PATENTANMELDUNG

(11) **EP 3 098 207 A1**
(43) Veröffentlichungstag der Anmeldung: **30.11.2016**
(21) Anmeldenummer: 16170794.8
(22) Anmeldetag: 23.05.2016
(51) Int. Cl.: C04B 28/02, C04B 18/02, C04B 103/00, C04B 111/40

(54) **VERFAHREN ZUR HERSTELLUNG EINES ZUSCHLAGES FÜR LEICHTBETON, ZUSCHLAG FÜR LEICHTBETON UND EIN LEICHTBETON, DER EINEN SOLCHEN ZUSCHLAG ENTHÄLT**

(30) Priorität: 27.05.2015 IT UB20151241
(71) Anmelder: Beton Eisack, 39043 Chiusa (IT)
(72) Erfinder: Kusstatscher, Werner, 39043 Chiusa (IT)
(74) Vertreter: Ausserer, Anton

(57) **Zusammenfassung**

Beschrieben werden ein Verfahren zur Herstellung eines Leichtzuschlages, Leichtzuschlag und ein Leichtbeton umfassend einen solchen Leichtzuschlag. Das Verfahren umfasst gemäß der Erfindung folgende Schritte:
-Mischung von Wasser und Zement
-hinzufügen von Aluminiumpaste
-Mischung der Masse
-Guss der Masse
-Bildung von Schaum
-Härtung der Masse
-Brechen der Masse

## Beschreibung

Die vorliegende Erfindung bezieht sich auf ein Verfahren zur Herstellung eines Zuschlages für Leichtbeton, Zuschlag für Leichtbeton und ein Leichtbeton, der einen solchen Zuschlag erfindungsgemäß enthält.

Leichtbeton wird eingesetzt im Bereich der thermischen Isolierung und im Bausektor wegen seiner vorteilhaften Merkmale. Der Einsatz dieses Materials vermeidet eine nachfolgende Isolierung zum Beispiel mittels Dämmung, um eine bessere thermische Isolierung zu erreichen.

Aus der EP 1 183 218 ist ein Leichtbeton bekannt, welcher einen Zuschlag aus Glasschaum umfasst, insbesondere Körnungen aus Glasschaum. Dieser Glasschaum wird, durch ein thermisches Verfahren durch recyceltes Glas hergestellt, wobei das recycelte Glas zusammen mit Aktivatoren auf eine Temperatur zwischen 75 und 950 °C gebracht wird. Das durch dieses Verfahren erhaltene Produkt wird dann gebrochen und in die Mischung zur Herstellung des Leichtbetons gegeben. Dieser Leichtbeton besitzt das doppelte Volumen im Verhältnis zum Gewicht gegenüber klassischem Beton.

Das Herstellungsverfahren bekannter Art des Zuschlagmaterials weist einige Nachteile auf. Das Produkt muss auf eine hohe Temperatur (750-950°C) gebracht werden. Außerdem erfordert das Verfahren eine anspruchsvoll strukturierte Anlage, um den Zuschlag vorzubereiten.

Aus der US 20120312193 ist ein geschäumter Leichtbeton bekannt. Dieser weist eine Dichte von 100 bis zu 800 kg/m3 auf. Aus diesem geschäumten Produkt werden Bausteine gegossen. Außerdem wird beschrieben, dass für das Ausgangsmaterial vor der Schäumung pulverisiertes recyceltes Material verwendet werden kann.

Der beschriebene Prozess erzeugt ein Endprodukt. Dieses Endprodukt, z.B. Baustein oder eine andere feste Form wird als fester Körper an den Einsatzort gebracht, nachdem er 7 bis 28 Tage ausgehärtet ist.

Das Endprodukt kann nicht direkt eingesetzt werden, da es bis zur Härtung wegen der Schäumung noch seine Größe ändern kann. Deshalb kann es nicht vor Ort gegossen werden.

Aus der "Sustainable Construction with Foam concrete as a Green Building Material", International Journal of Modern Trends in Engineering and Research, 31 Dezember 2014 ist ein Artikel zum Gebrauch von Schaum bekannt. In diesem wird vorgeschlagen, mit Flugasche (flyn ash) Zement im Zementschaum zu ersetzten. Das Endprodukt kann in diesem Fall nicht direkt eingesetzt werden, da es bis zur Härtung noch wegen der Schäumung seine Größe ändern kann. Deshalb kann es nicht vor Ort gegossen werden.

Die Aufgabe der vorliegenden Erfindung ist die Ausführung eines Verfahrens zur Herstellung eines Zuschlages für Leichtbeton, ein Zuschlag für Leichtbeton und ein Leichtbeton umfassend den erfindungsgemäßen Zuschlag, wobei der erfindungsgemäße Zuschlag schon ausgehärtet und nicht beim Betonguss noch seine Größe ändert.

Diese Aufgabe wird erfüllt durch ein Verfahren um einen Zuschlag für Leichtbeton herzustellen, einen Zuschlag für Leichtbeton und einen Leichtbeton umfassend den erfindungsgemäßen Zuschlag.

Der Leichtbeton umfasst erfindungsgemäß ein Bindemittel, insbesondere Zement mit einem Leichtzuschlag, wobei der genannte Leichtzuschlag ein fester und gebrochener Zementschaum ist.
Das erfindungsgemäße Verfahren um den Zuschlag für den Leichtbeton herzustellen, umfasst einen ersten Schritt, wobei der Zementschaum sich zuerst ausdehnt und dann aushärtet.

Insbesondere wird der Zement mit Wasser gemischt. Nach dem Mischen der Masse wird in Wasser aufgelöste Aluminiumpaste hinzugefügt und noch einmal durchgemischt. Die gesamte Mischung wird dann in eine Betonwanne (oder ähnliches) gegossen. Diese Wanne kann auch zum Beispiel eine auf/abbaubare nur temporäre Struktur sein. Vor dem Guss wird eine Struktur mit vier Wänden gebildet und man verwendet den normalen Untergrund oder eine vorbereitete Fläche. Nachdem die Mischung ausgehärtet ist, wird die externe Struktur abgebaut um leichter an die ausgehärtete Mischung zu gelangen.

Während des Befeuchtungsschritts werden hohe pH-Werte erreicht. In diesem stark alkalischen Umfeld reagiert die Aluminiumpaste und bildet Wasserstoffgas. Die Wasserstoffbläschen bilden dann die poröse Struktur des Materials. Nach der Schäumung und der Aushärtung wird das Material mittels einer Schaufel oder Maschinen aus der Wanne entfernt. Diese Entfernung kann durch den Abbau der Struktur der Wanne vereinfacht werden.

In einer verbesserten Ausführung des Verfahrens ist ein Verhältnis Wasser/Zement zwischen 0,6 bis zu 0,8 vorgesehen. Wenn die Wassermenge geringer ist, kann die Mischung das Gas nicht in ihrem Inneren behalten und dieses tritt aus der Mischung aus und somit bildet der Zement nicht die poröse Struktur. Wenn zu viel Wasser vorhanden ist, ist die Mischung zu flüssig und die Gasbläschen können zu leicht entweichen und bilden nicht die Poren in der Struktur des Zements.

Es ist bewiesen worden, dass ein Mischverhältnis Wasser/Zement 0,7 das ideale ist. Um die Wassermenge in der Mischung zu verringern, können Materialien als Fließhilfen eingesetzt werden. Insbesondre mit der Zugabe von 3% an Mittel als Fließhilfe kann das Verhältnis Wasser/Zement auf 0,2 verringert werden. Aber der Einsatz von Mitteln als Fließhilfe führt nicht immer zur gewollten Schaumbildung, führt jedoch zu einer schnelleren Aushärtung.

Ein weiterer wesentliche Parameter ist die Menge an Aluminiumpaste, welche der Mischung beigefügt wird. Von der Menge von Aluminiumpaste hängt die Wasserstoffgasbildung ab. In einer vorteilhaften Ausführung des Verfahrens wird 0,13% bis 0,19% Gewicht Aluminiumpaste der ersten Qualität beigemischt. Diese Menge ändert sich in Bezug auf die eingesetzte Qualität der Aluminiumpaste. Je weniger aktives Aluminium in der Aluminiumpaste vorhanden ist, desto grösser in Gewichtprozent ist beigefügte Menge. Diese Menge hängt deshalb auch von der Qualität (Reinheit) der eingesetzten Aluminiumpaste ab.

Um die Porenbildung zu verbessern, können andere Zusätze hinzugefügt werden, welche Wasserstoff bilden.

Besonders vorteilhaft erscheint der Einsatz von CEM I 52,5. Dieser Zement hat zu einer hohen Festigkeit geführt.

Weiters vorteilhaft erscheint ein pH-Wert des Wassers zwischen 5 und 9.

Ein weiterer wichtiger Faktor während des Verfahrens zur Herstellung des Leichtzuschlages ist die Mischgeschwindigkeit.

Bei einer geringen Mischgeschwindigkeit der Mischung zum Beispiel bei 300 Umdrehungen pro Minute bleibt die Dichte der Zusammensetzung aus Leichtzementschaum hoch bei 470 kg/m3. Hingegen wenn man die Mischgeschwindigkeit erhöht, verringert sich die Dichte zum Beispiel bei 300 Umdrehungen pro Minute. Die Dichte der Zusammensetzung aus Leichtzementschaum ist 420 kg/m3.

In diesem Fall, aber, verringert sich die Festigkeit um 10-15%.

Erhöht man weiter die Mischgeschwindigkeit zum Beispiel auf 1000 Umdrehungen pro Minute in einem Laborbehälter, bleibt die Dichte des Leichtbetonzuschlages bei 420kg/m3, aber die Festigkeit erhöht sich und ist fast gleich der in N/mm2 des dichteren Materials. Die obige Geschwindigkeit entspricht in einem Betonmischer 15 Umdrehungen in der Minute.

Die Mischung des Leichtbetons kann auch zum Beispiel in einem Betonmischer, in einem Mischer im allgemeinen, zum Beispiel einem Labormischer oder einem Vormischsystem erfolgen.

Im Falle der Mischung in einem Betonmischer ist die Mischgeschwindigkeit bevorzugter Weise über 10 Umdrehungen in der Minute bei 5 bis 10 Minuten oder über 15 Umdrehungen in der Minute bei 2 bis 5 Minuten.

Vormischsysteme befinden sich in Fixanlagen zur Herstellung von Zement.

Das gehärtete Produkt wird dann bis zur gewünschten Größe gebrochen.

Das Material kann durch einen Sieb geführt werden, um ideale Größe oder eine für das Produkt verwendbare zu gewährleisten. Die Korngröße beträgt bevorzugt zwischen 0 und 70mm. Vorteilhafterweise wird das gebrochene Material in Kornbereiche von 0mm bis 4mm, von 4 mm bis 8 mm, von 8 mm bis 16 mm, von 16 mm bis 32 mm, von 32mm bis 45 mm und von 45mm bis 70mm gebrochen.

Das so erhaltene Produkt kann dem Beton als Leichtzuschlag beigemischt werden.

Dieser Leichtzuschlag weist auch gegenüber den erhältlichen Zuschlägen im Handel andere Vorteile auf. Da es sich um Beton handelt, so kann der gesamte Beton zusammen wiederverwertet werden.

Die Entsorgung des Materials benötigt keine Trennung das es sich um das selbe Basismaterial handelt.
Außerdem handelt es sich um ein natürliches Material, welches keine besonderen Entsorgungsanlagen benötigt, sondern es kann recycelt und/oder wiederverwertet werden.

Außerdem kann der Beton, den man mit der Zugabe des Zuschlages erhält, leicht mit dem Betonmischer hergestellt werden und muss nicht erst vor Ort gemischt werden oder mittels vorgefertigter Teile hergestellt werden.

Hier nachfolgend wird ein Herstellungsverfahren nicht begrenzend beschrieben.

Das erfindungsgemäße Herstellungsverfahren zur Herstellung eines Leichtzuschlages für Beton, umfasst di folgenden Schritte:
- Mischung von Wasser und Zement
- hinzufügen von Aluminiumpaste
- Mischung der Masse
- Guss der Masse
- Bildung von Schaum
- Härtung der Masse
- Brechen der Masse
In einer bevorzugten Ausführungsform ist das Verhältnis zwischen Wasser/Zement zwischen 0,6 und 0,8.

Besonders vorteilhaft erfolgt eine Mischung der Masse bei über 500 Umdrehungen die Minute in einem Laborbehälter und über 10 Umdrehungen in der Minute im Betonmischer von 5 bis 10 Minuten, insbesondere über 1000 Umdrehungen/Minute in einem Laborbehälter und über 15 Drehungen in der Minute im Betonmischer für 2 bis 5 Minuten.
Zur Vorbereitung der Mischung wird erfindungsgemäß Aluminiumpaste zwischen 0,13% und 0,19% Gewicht Mischung hinzugefügt.

In einer bevorzugten Ausführungsform kann ein Mittel als Fließhilfe zwischen 2-3% Gewicht vom eingesetzten Zement verwendet werden.

Die eingesetzte Aluminiumpaste ist vorteilhafterweise von der Klasse I d.h. es enthält 70% Metall und davon 92% aktives Aluminium.
Aus der Forschung ergibt sich besonders vorteilhaft, dass Zement der Klasse I 52,5 CEM eingesetzt wird.

Der Leichtbetonzuschlag, den man so erhält, wird ausgehärtet. Die Härtungsperiode kann auch 20 Tage dauern, abhängig von äußeren Faktoren und von den beigefügten Zusätzen. In einer bevorzugten Ausführungsform beträgt das Aushärten zwischen 3 und 28 Tage.

Der Guss der Mischung kann in einer vorbereiteten Gussform erfolgen, zum Beispiel in einer Wanne, die aus Stahlbeton hergestellt wurde oder in einer Wanne, die aus einer temporären auf/abbaubaren Struktur hergestellt wurde.

Nach der Aushärtung wird das Material gebrochen. Dies kann auf verschiedene Art und Weisen erfolgen, zum Beispiel durch einen Backenbrecher. Um das Material zu uniformieren kann dieses einen oder mehrere Siebe passieren.

Nach der Brechung kann das so erhaltene Material bei der Herstellung von Beton beigemischt werden.

Man mischt den Zement, Wasser, verschiedene Zusätze und man fügt den Leichtzuschlag hinzu.

Die Mischung 1 zum Beispiel kann 55% in der Masse Zement umfassen, zum Beispiel Zement CEM 32,5, 4% in Masse den Leichtzuschlag mit einer Größe von weniger als 8 mm und 18% in der Masse von Leichtzuschlag mit einer Größe von mehr als 8 mm, 0,2 % von Material als Fließhilfe, 0,3% in Masse von Elementen, die künstliche Luftporen bilden, und 23% von der Masse Wasser.

Die Mischung 2 zum Beispiel kann 44% in der Masse Zement umfassen, zum Beispiel Zement CEM 32,5, 7% in Masse, den Leichtzuschlag mit einer Größe von weniger als 8 mm und 30% in der Masse von Leichtzuschlag mit einer Größe von mehr als 8 mm, 0,2 % von Material als Fließhilfe, 0,2% in Masse von Elementen, die künstliche Luftporen bilden, und 18% von der Masse Wasser.

Nach 28 Tagen ergeben sich bei der Mischung 1 eine Festigkeit von 13,5 N/mm2 und eine Dichte von 1259 kg/m3 und für die Mischung 2 eine Festigkeit von 9,5 N/mm2 und eine Dichte von 1158 kg/m3.

Aus den gesammelten Daten ergibt sich, dass die Mischung 1 für die Herstellung von Leichtbeton geeignet ist, dass diese eine Dichte von ungefähr 1200kg/m3 aufweist und eine Festigkeit höher als 12 N/mm2, welche von den meisten Normen verlangt wird.

Die Merkmale für Leichtbeton in Bezug auf die Eigenschaft thermisch zu isolieren wird durch die Wärmeleitfähigkeit ausgedrückt, mit einem Wert von 0,1 und 0,3 W/mK.
Des weiteren können verschiede Techniken verwendet werden, zum Beispiel die Karbonisierung oder es können andere Zusätze hinzugefügt werden, um zu verhindern, dass der Leichtbetonzuschlag Wasser aufnimmt.

Die gesamte Herstellung /Mischung des Leichtbetons kann während des Transports zum Einsatzort im Betonmischer erfolgen.

Es kann beim erfindungsgemäßen Verfahren eine Hydrophobierung durchgeführt werden. Unter einer Hydrophobierung versteht man eine hydrophobierende Imprägnierung die eine wasserabweisende Beschichtung darstellt, welche leicht in die Oberfläche einzieht. Es besteht eine schützende Wirkung gegenüber Flüssigkeiten und eine geringe Verhinderung der Diffusion von CO2. Diese zeigt eine sich besonders effektive bei einem Leichtbeton der mit einem erfindungsgemäßen Zuschlag hergestellt wurde oder bei einem erfindungsgemäßen Zuschlag wegen Ihrer großen Porosität.

Um die dimensionale Stabilität des erfindungsgemäßen Leichtbetons zu garantieren kann ein Schwindreduzierer eingesetzt werden. Dieser reduziert das Schwinden des Zementsteins und vermindert die Neigung zum Reißen und Verformen des erhärtenden Bauteils.
Dem Leichtbeton kann auch eine Hydrophobierung beigemischt werden.

Es ist klar dass an den vorstehenden Ausführungen der Erfindung für den Fachmann offensichtliche Zusätze, Änderungen oder Varianten vorgenommen werden ohne den Schutzbereich zu verlassen der durch die Patentansprüche festgelegt wird.

## Patentansprüche

1. Verfahren zur Herstellung eines Leichtzuschlages für Beton **gekennzeichnet durch** folgende Schritte:
- Mischung von Wasser und Zement
- hinzufügen von Aluminiumpaste
- Mischung der Masse
- Guss der Masse
- Bildung von Schaum
- Härtung der Masse
- Brechen der Masse

2. Verfahren zur Herstellung eines Zuschlages nach Anspruch 1, **dadurch gekennzeichnet dass** das Verhältnis Wasser/Zement zwischen 0,6 und 0,8 liegt.

3. Verfahren zur Herstellung eines Zuschlages nach einem der vorhergehenden Ansprüche, **dadurch gekennzeichnet, dass** die Menge der hinzugefügten Aluminiumpaste der Klasse 1 zwischen 0,13% und 0,19% Gewicht der Masse ist, o äquivalentes aktives Aluminium in der Hinzufügung ist.

4. Verfahren zur Herstellung eines Zuschlages nach einem der vorhergehenden Ansprüche, **dadurch gekennzeichnet dass** die Mischgeschwindigkeit bei über 500 Drehungen/Minute für Mischer für Labors oder bei über 10 Drehungen/Minute für Betonmischer Mischdauer zwischen 5 und 10 Minuten liegt.

5. Verfahren zur Herstellung eines Zuschlages nach einem der Ansprüche von 1 bis 3, **dadurch gekennzeichnet dass** die Mischgeschwindigkeit bei über 1000 Drehungen/Minute für Mischer für Labors oder bei über 15 Drehungen/Minute für Betonmischer Mischdauer zwischen 2 und 5 Minuten liegt.

6. Verfahren zur Herstellung eines Zuschlages nach einem der vorhergehenden Ansprüche, **dadurch gekennzeichnet dass** Aluminiumpaste 70% Metall umfasst, von dem 92% aktives Aluminium ist.

7. Verfahren zur Herstellung eines Zuschlages nach einem der vorhergehenden Ansprüche, **dadurch gekennzeichnet, dass** der Zement ein CEM I 52,5 oder CEM II 32,5 ist.

8. Verfahren zur Herstellung eines Zuschlages nach einem der vorhergehenden Ansprüche, **dadurch gekennzeichnet, dass** nach dem Hinzufügen von Aluminiumpaste ein weiterer Zuschlag hinzugefügt wird.

9. Verfahren zur Herstellung eines Zuschlages nach einem der vorhergehenden Ansprüche, **dadurch gekennzeichnet, dass** vor der Mischung der Masse eine Hydrophobierung durchgeführt wird.

10. Zuschlag für Leichtbeton **dadurch gekennzeichnet, dass** er durch ein Verfahren nach einem der vorhergehenden Ansprüche hergestellt wird.

11. Leichtbeton **dadurch gekennzeichnet, dass** er einen ausgehärteten Zuschlag umfasst, der durch ein Verfahren nach Anspruch 1 bis 9 hergestellt wurde.

12. Leichtbeton nach Anspruch 11, **dadurch gekennzeichnet, dass** dem Leichtbeton ein Schwindreduzierer beigemischt wird.

13. Leichtbeton nach Anspruch 11, **dadurch gekennzeichnet, dass** dem Leichtbeton eine Hydrophobierung beigemischt wird.
